(19) Europäisches Patentamt
European Patent Office
Office européen des brevets

(11) **EP 3 057 760 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(21) Anmeldenummer: **14793030.9**

(22) Anmeldetag: **14.10.2014**

(51) Int Cl.:
**B29C 45/77** (2006.01)    **B29C 45/76** (2006.01)
**B29C 45/26** (2006.01)

(86) Internationale Anmeldenummer:
**PCT/EP2014/071991**

(87) Internationale Veröffentlichungsnummer:
**WO 2015/055636 (23.04.2015 Gazette 2015/16)**

(54) **VERFAHREN ZUR BEURTEILUNG VERFAHRENSTECHNISCHER EIGENSCHAFTEN VON SPRITZGIESSWERKZEUGEN**

METHOD FOR EVALUATING PROCESS CHARACTERISTICS OF INJECTION-MOLDING TOOLS

PROCÉDÉ PERMETTANT D'ÉVALUER LES PROPRIÉTÉS TECHNIQUES D'OUTILS DE MOULAGE PAR INJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2013 DE 102013111328**

(43) Veröffentlichungstag der Anmeldung:
**24.08.2016 Patentblatt 2016/34**

(73) Patentinhaber: **KraussMaffei Technologies GmbH 80997 München (DE)**

(72) Erfinder: **SCHIFFERS, Reinhard 47269 Duisburg (DE)**

(74) Vertreter: **Wilhelm, Ludwig KraussMaffei Group GmbH Patentabteilung CFL2 Krauss-Maffei-Str. 2 80997 München (DE)**

(56) Entgegenhaltungen:
**EP-A1- 1 166 994     US-A- 5 738 809**

• SHETH H R ET AL: "AN ADAPTIVE CONTROL METHODOLOGY FOR THE INJECTION MOLDING PROCESS. PART 1: MATERIAL DATA GENERATION", JOURNAL OF INJECTION MOLDING TECHNOLOGY, SOCIETY OF PLASTICS ENGINEERS, BROOKFIELD, CT, US, Bd. 2, Nr. 2, 1. Juni 1998 (1998-06-01), Seiten 86-94, XP000767323, ISSN: 1533-905X

**Beschreibung**

Die Erfindung betrifft ein Verfahren zur Beurteilung verfahrenstechnischer Eigenschaften von Spritzgießwerkzeugen im Sinne einer qualitativen und/oder quantitativen Einordnung von Spritzgießwerkzeugen in Werkzeugkategorien. Darauf aufbauend wird eine Ermittlung von bevorzugten Eingriffsbereichen und/oder Stellgrößen zur Anpassung von Spritzgießmaschinenparametern im Falle sich ändernder Umgebungsbedingungen und/oder dem Wirken von Störeffekten auf einen Spritzgießprozess dargestellt.

Ein ideal eingestellter Spritzgießprozess einer Spritzgießmaschine mit einem bestimmten Werkzeug zur Herstellung eines bestimmten Formteiles unterliegt im zyklischen Betrieb in der Realität laufend Schwankungen, die auf sich ändernde Umgebungsbedingungen und/oder auf das Wirken von Störeffekten auf den Spritzgießprozess zurückzuführen sind (siehe zum Beispiel US 5 738 809 A oder EP 1 166 994 A). Solche sich ändernde Umgebungsbedingungen können beispielsweise sein:

- sich ändernde Hallentemperatur in der Werkshalle, in der die Spritzgießmaschine aufgestellt ist. Dadurch kann es zu geänderten Verlustwärmeströmen vom Werkzeug oder von den Heizeinrichtungen der Spritzgießmaschine in die Umwelt kommen, was wiederum direkten Einfluss auf die Temperatur der Schmelze und somit deren Viskosität haben kann.

- Qualitätsschwankungen des zu verarbeitenden Rohstoffs, wobei sich beispielsweise von Charge zu Charge Fasergehalt, Feuchtigkeit oder Regranulatanteil des Rohstoffes ändern kann, was ebenfalls Viskositätsänderungen der Schmelze bei fest voreingestellten Spritzgießmaschinenparametern bewirken kann.

Hierdurch kann es zu erheblichen Qualitätsabweichungen der hergestellten Formteile kommen. Beispielsweise kann es zu einer Überfüllung des Formwerkzeuges, dass heißt zu einem Überspritzen kommen, was zum einen nicht erwünschte Grate am Formteil hervorruft und zum anderen zu einer Beschädigung des Formwerkzeuges führen kann. Andererseits kann es zu einer mangelhaften Formfüllung führen, was sich durch nicht vollständig ausgeformte Formteile zeigt, welche ebenfalls im weiteren Verlauf als Ausschuss einzustufen sind, wenn die erforderlichen Qualitätsmaßstäbe nicht mehr erreicht werden.

Um Effekte sich über die Zeit ändernder Viskosität der Schmelze zu kompensieren ist es bekannt, auf der Basis einer Druckmessung in der Werkzeugkavität die Nachdruckhöhe anzupassen. Des Weiteren ist es bekannt, zur Korrektur geänderter Viskositäten den Zeitpunkt und/oder die Position der Umschaltung von der Einspritzphase in die Nachdruckphase, dass heißt die Festlegung des sogenannten Umschaltpunktes anzupassen. Dabei ist es beim Stand der Technik in beiden oben genannten Verfahren notwendig, dass ein erfahrener, dass heißt intensiv ausgebildeter Maschinenbediener auf der Basis der Kenntnis des herzustellenden Teils und damit auf Basis der Kenntnis der Werkzeugkavität und dessen Eigenschaften zunächst die Art der geeigneten Eingriffsbereiche und/oder der geeigneten Stellgrößen zu ermitteln. In einem zweiten Schritt ist der erfahrene Maschinenbediener gefragt, nachdem er eine geeignete Art der zu beeinflussenden Stellgrößen oder Eingriffsbereiche ausgewählt hat, zusätzlich aufgrund seiner Erfahrung die Höhe des Eingriffes oder die Höhe der Veränderungen festzulegen, die vorzunehmen sind, um wieder ein qualitativ gutes Formteil zu erhalten. Dies ist darin begründet, dass die sinnvolle Auswahl von Eingriffsbereichen und/oder Stellgrößen wie auch eine Höhe eines jeweiligen Eingriffs stark von der Geometrie eines jeweiligen herzustellenden Teiles abhängig ist, beispielsweise ein sehr dünnwandiges oder ein eher dickwandiges Formteil und die Qualitätsschwankung des Rohstoffes und/oder des Rohstofftyps. So ist es beispielsweise bei einem relativ dünnwandigen Bauteil, das heißt bei einer relativ dünnwandigen Werkzeugkavität, bei der es sehr schnell zu Erstarrungsvorgängen der Schmelze kommt, wenig wirksam, den Nachdruck zu erhöhen oder die Nachdruckdauer zu verlängern. Erfolgversprechender für eine sinnvolle Auswahl des Eingriffsbereiches ist hier vielmehr die Einspritzgeschwindigkeit, um sicherzustellen, dass das Formwerkzeug möglichst vollständig gefüllt wird oder das Füllvolumen im Falle des Überspritzens etwas zurückgenommen wird.

Für eine derartige Änderung der Spritzgießmaschinenparameter und deren grundsätzliche Auswahl ist im Stand der Technik zwingend ein erfahrener Maschinenbediener erforderlich, der auf der Basis seines Wissens und seines Könnens zielführende Eingriffsbereiche und/oder Stellgrößen auswählt und diese hinsichtlich ihrer Höhe korrekt korrigiert. Dabei ist nachteilig, dass ein vollständiges Automatisieren des Spritzgießprozesses nicht möglich ist, da bei sich ändernden Umgebungsbedingungen oder dem Auftreten oder dem Wirken von Störeffekten auf den Spritzgießprozess zwingend ein Eingreifen eines erfahrenen Maschinenbedieners notwendig ist.

Als Basis für ein optimierendes Eingreifen wird u.a. eine Druckmessung in der Werkzeugkavität vorgenommen. Das hat aber zur Folge, dass ein zusätzlicher Drucksensor in der Werkzeugkavität benötigt wird. Betreffend einen solchen Drucksensor hat sich gezeigt, dass dieser zum einen kostenintensiv anzubringen ist und im Rahmen der Werkzeugwartung hohen Wartungsaufwand erzeugt.

Aufgabe der Erfindung ist es daher, ein Verfahren zur qualitativen und/oder quantitativen Einordnung von Spritzgießwerkzeugen in Werkzeugkategorien und zur Ermittlung von bevorzugten Eingriffsbereichen und/oder Stellgrößen zur Anpassung von Spritzgießmaschinenparametern im Falle sich ändernder Umgebungsbedingungen und/oder dem Wirken von Störeffekten auf den Spritzgießprozess anzugeben, welches automatisiert oder teilautomatisiert betrieben werden kann. Des Weiteren ist es Aufgabe der Erfindung den erfindungsgemäßen Erfolg zu erzielen, wobei charakteristische Größen eines Spritzgießprozesses in einfacher Art und Weise, dass heißt auf der Basis üblicherweise messtechnisch erfasster Größen einer Spritzgießmaschine ermittelt und verwertet werden können.

Diese Aufgaben werden mit einem Verfahren mit den Merkmalen des Anspruchs 1 gelöst. Vorteilhafte Ausführungsformen sind in den Unteransprüchen angegeben.

Es soll somit ermöglicht werden, eine Spritzgießmaschine im zyklischen Betrieb möglichst ohne Überwachung oder korrigierenden Eingriff durch einen erfahrenen Maschinenbediener durchzuführen.

Erfindungsgemäß wurde erkannt, dass zum automatischen oder teilautomatischen Betrieb eines Spritzgießprozesses für ein bestimmtes Werkzeug oder für verschiedene Werkzeuggeometrien eine geschickte Auswahl der Stellgrößen und/oder der Eingriffsbereiche sowie deren Korrekturwert ohne Mitwirken eines erfahrenen Maschinenbedieners erfolgen soll. Hierzu schafft die Erfindung ein Verfahren, bei dem die relevanten Eigenschaften des Spritzgießwerkzeuges aus Prozessparametern der Spritzgießmaschine im zyklischen Betrieb abgeleitet werden. Erfindungsgemäß wurde erkannt, dass eine bestimmte Kennzahl im Form eines Quotienten Q aus einem Druckanstieg $\Delta p$, zum Beispiel dem Werkzeuginnendruck oder dem Massedruck in der Komprimierungsphase des Spritzgießprozesses am Ende der Einspritzphase als Zähler und dem in diesem Zeitfenster, dass heißt während der Komprimierungsphase am Ende der Einspritzphase, verdrängten Schmelzevolumens AV im Nenner als Kennzahl geeignet ist. Das während der Komprimierungsphase des Spritzgießzyklusses verdrängte Schmelzevolumen $\Delta V$ kann in einfacher Art und Weise über den korrespondierenden Schneckenweg As ermittelt werden. Der Druckanstieg $\Delta p$ während der Komprimierungsphase des Spritzgießprozesses kann, falls ein Drucksensor in der Werkzeugkavität vorhanden ist, über den Werkzeuginnendruck oder über den Massedruck in einer Einspritzeinrichtung der Spritzgießmaschine ermittelt werden.

Alternativ kann ein geeigneter Quotient Q aus dem Verhältnis des in der Nachdruckphase verdrängten Volumens $\Delta V_n$ gemessen über den Schneckenweg $\Delta s_n$ in der Nachdruckphase und dem in der Einspritzphase verdrängten Volumen $\Delta V_e$ gemessen über den Schneckenweg $\Delta s_e$ in der Einspritzphase ermittelt werden. Anstelle einer Wegänderung $\Delta s_n$ kann auch eine daraus abgeleitete Geschwindigkeitsänderung überwacht werden, da beide Größen ineinander umgerechnet werden können. So ist beispielsweise bei einem ersten Formwerkzeug, welches zur Herstellung eines dünnwandigeren Bauteiles vorgesehen ist, der Quotient Q aus dem Druckanstieg $\Delta p$ und dem verdrängten Schmelzevolumen $\Delta V$, dass heißt umgerechnet auf den bei der Ermittlung der verdrängten Volumina zurückgelegten korrespondieren Schneckenweg $\Delta s$ der Quotient $Q = \Delta p/\Delta s$ größer als bei einem Werkzeug, welches eher dickwandigere Bauteile produzieren soll.

In einem Gutteil-Prozess wird mit konstantem Volumen in der Einspritzphase gearbeitet, so dass bis zum Erreichen des Umschaltpunktes eine jeweils erforderliche Formfüllung erreicht sein muss. Je mehr Volumen $\Delta V_n$ in der Nachdruckphase in Relation zum Volumen $\Delta V_e$ in der Einspritzphase verdrängt wird, desto eher ist von einer dickwandigeren Grundcharakteristik des Formteils und somit des Formwerkzeuges auszugehen, sodass hieraus folgt, dass je größer der Quotient $Q = \Delta s_n/\Delta s_e$, desto eher entspricht die Werkzeugcharakteristik, also die Werkzeugkategorie, einem dickwandigeren Bauteil. Daraus kann beispielsweise gefolgert werden, dass je dickwandiger das Bauteil ist, es mehr und mehr Sinn macht, korrigierend in der Nachdruckphase einzugreifen und mit steigendem $Q = \Delta s_n/\Delta s_e$ auch die Höhe des Eingriffs zur Anpassung der Spritzgießmaschinenparameter größer zu wählen. Anhand dieser Quotienten $Q = \Delta p/\Delta s$ oder $Q = \Delta s_n/\Delta s_e$ kann somit eine Grundsatzentscheidung getroffen werden, in welchem Eingriffsbereich, dass heißt beispielsweise in der Einspritzphase, in der Komprimierungsphase oder der Nachdruckphase; eine erfolgreiche Anpassung der Spritzgießmaschinenparameter am vielversprechensten ist und/oder in einem zweiten Bewertungsschritt die Höhe der vorzunehmenden Anpassung dieser Spritzgießmaschinenparameter ermittelt werden.

Dabei wird erfindungsgemäß für die Werte des Quotienten Q zumindest ein Grenzwert ($G_1$; ...; $G_x$; ...; $G_n$) bereit gestellt, wobei anhand dieser Grenzwerte bestimmt wird, ob der Wert des Quotienten Q kleiner oder gleich dem Grenzwert $G_1$ oder größer als der Grenzwert $G_n$ oder in einem Bereich dazwischen, insbesondere zwischen zwei Grenzwerten $G_{n-1}$ und $G_n$ liegt. Diesen Bereichen, die durch die Festlegung der bereitgestellten Grenzwerte ($G_1$; ...; $G_n$) von einander getrennt sind, sind erfindungsgemäß ein oder mehrere Empfehlungen für bevorzugte Eingriffsbereiche oder Stellgrößen zur Anpassung von Einstellparametern der Spritzgießmaschine zugeordnet. Liegt eine solche Entscheidungsmatrix, dass heißt festgelegte Grenzwerte ($G_1$; ...; $G_n$) und die hierdurch definierten Bereiche vor, kann ermittelt werden, in welchen der Bereiche der Wert des Quotienten Q liegt.

Anschließend kann ein dem ermittelten Bereich zugeordneter bevorzugter Eingriffsbereich und/oder ein bevorzugtes Maß für die Änderung der Stellgröße zur Anpassung der Maschinenparameter der Spritzgießmaschine ausgegeben werden. In einem teilautomatischen Betrieb kann dies beispielsweise auf ein Display erfolgen, derart, dass auch ein unerfahrener Maschinenbediener lediglich die von der Maschine selbst vorgeschlagenen Werte in die Maschinensteuerung übernimmt, ohne selbst eine diesbezügliche fachliche Entscheidung treffen zu müssen. In einem vollautomatischen Betrieb kann die Ausgabe der dem ermittelten Bereich zugeordneten bevorzugten Eingriffsbereiche und/oder das Maß für die Änderung der Stellgrößen auch an eine Maschinensteuerung direkt ausgegeben werden, mittels der dann im nächsten Spritzgießzyklus korrigierte Spritzgießmaschinenparameter zur Anwendung kommen.

Die Ermittlung des erfindungsgemäß als Werkzeug charakterisierenden und/oder Rohstoff charakterisierenden Quotienten $Q = \Delta p/\Delta s$ oder $Q = \Delta s_n/\Delta s_e$ erfolgt durch Messung während mindestens eines Spritzgießzyklusses mit Spritzgießmaschineneinstellungen zum Erhalt eines qualitativ ausreichenden Spritzgießteiles mit dem zu bewertenden Werkzeug und/oder Rohstoff. Hierzu wird eine Spritzgießmaschine aufweisend das einzuordnende und für die Ermittlung vorgesehene Spritzgießwerkzeug bereit gestellt und/oder der zu charakterisierende und für die Ermittlung vorgesehene Rohstoff zur Verfügung gestellt.

Somit zeichnet sich das erfindungsgemäße Verfahren zur qualitativen und/oder quantitativen Einordnung von Spritzgießwerkzeugen in Werkzeugkategorien und Ermittlung von bevorzugten Eingriffsbereichen und/oder Stellgrößen zur Anpassung von Spritzgießmaschinenparametern im Falle sich ändernder Umgebungsbedingungen und/oder dem Wirken von Störeffekten auf den Spritzgießprozess durch folgende Schritte aus:

    a) Bereitstellen einer Spritzgießmaschine aufweisend das einzuordnende und für die Ermittlung vorgesehene Spritzgießwerkzeug,
    b) Durchführen mindestens eines Spritzgießzyklusses mit Spritzgießmaschineneinstellungen zum Erhalt eines qualitativ ausreichenden Spritzgießteiles,
    c) Ermitteln eines das betreffende Werkzeug charakterisierenden Quotienten $Q = \Delta p/\Delta s$ oder $Q = \Delta s_n/\Delta s_e$ aus

        c.1) einem Druckanstieg $\Delta p$ während der Komprimierungsphase des Spritzgießzyklusses und des während dessen verdrängten Schmelzevolumen $\Delta V$ oder
        c.2) einem während der Nachdruckphase verdrängtem Schmelzevolumen $\Delta V_n$ und dem während der Einspritzphase verdrängten Schmelzevolumen $\Delta V_e$, wobei
        c.3) zur Ermittlung der verdrängten Volumina $\Delta V$, $\Delta V_n$ und $\Delta V_e$ der korrespondierende Schneckenweg $\Delta s$, $\Delta s_n$ und $\Delta s_e$ gemessen wird,

    d) Bereitstellen zumindest eines Grenzwertes $(G_1...G_x...G_n)$, wobei Bereichen $(Q \leq G_1; G_1 < Q \leq G_2; G_{n-1} < Q \leq G_n, Q > G_n)$ für die Werte des Quotienten Q ein oder mehrere Empfehlungen für bevorzugte Eingriffsbereiche oder Stellgrößen zur Anpassung von Einstellparametern der Spritzgießmaschine zugeordnet sind,
    e) Ermitteln, in welchem der Bereiche $(Q \leq G_1; G_1 < Q \leq G_2; G_{n-1} < Q \leq G_n, Q > G_n)$ der Wert des Quotienten Q liegt und
    f) Ausgabe der dem ermittelten Bereich zugeordneten bevorzugten Eingriffsbereiche und/oder Stellgrößen zur Anpassung der Maschinenparameter der Spritzgießmaschine.

In einer bevorzugten Ausführungsform wird zur Ermittlung des Druckanstiegs $\Delta p$ der Verlauf des Massedrucks oder des Werkzeuginnendrucks gemessen. Für den Fall, dass der Verlauf des Massedrucks gemessen wird, kann auf den eingangs als nachteilig beschriebenen Drucksensor in der Werkzeugkavität verzichtet werden. Selbstverständlich kann das erfindungsgemäße Verfahren auch über die Messung des Werkzeuginnendrucks, beispielsweise bei Werkzeugen die bereits über einen Werkzeuginnendrucksensor verfügen, durchgeführt werden.

In einer weiteren Ausbildung des Verfahrens gemäß der Erfindung wird ein Korrekturfaktor $K_{dyn}$ bereitgestellt oder ermittelt, mittels dem der Wert des Quotienten Q um dynamisch bedingte Änderungen des Wertes für Q, zum Beispiel um einen Einfluss der Einspritzgeschwindigkeit bereinigt wird. Derartige Korrekturfaktoren können auf der Kenntnis und der Erfahrung von erfahrenen Maschinenbedienern bereitgestellt werden. Gleichwohl können diese Korrekturfaktoren $K_{dyn}$ auch aus Maschinenparametern während der Durchführung des mindestens einen Spritzgießzyklusses mit Spritzgießmaschineneinstellungen zum Erhalt eines qualitativ ausreichenden Spritzgießteiles ermittelt werden.

Um dynamische Effekte in der Berechnung des Quotienten $Q = \Delta p/\Delta s$ oder $Q = \Delta S_n/\Delta S_e$ zu berücksichtigen, kann beispielsweise die Einspritzgeschwindigkeit der Schmelze in das Werkzeug als Gewichtungsfaktor mitberücksichtigt werden. Um weitere Randbedingungen, die maßgebenden Einfluss auf den Spritzgießprozesses haben, mit zu erfassen, können weitere an Spritzgießmaschinen übliche Prozessparameter, zum Beispiel Temperaturen des Zylinders und des Werkzeugs, Druck und/oder Kräfte in verschiedenen Prozessphasen, zum Beispiel der Einspritzphase, der Komprimierungsphase und/oder der Nachdruckphase oder Energiekennzahlen wie zum Beispiel eine Fließzahl zur relativen Beschreibung der Fließfähigkeit des aktuell zu verarbeitenden Rohstoffs mit in die Bewertung und die Ermittlung des Korrekturfaktors $K_{dyn}$ einfließen.

Als empfohlene Eingriffsbereiche bieten sich gemäß einer vorteilhaften Ausführungsform der Erfindung die Einspritzphase, die Komprimierungsphase oder die Nachdruckphase des Spritzgießzyklusses an.

Als bevorzugte Stellgrößen, auf die qualitativ und/oder quantitativ gemäß der Erfindung Einfluss genommen wird, kann bevorzugt der Umschaltpunkt in Abhängigkeit der Schneckenposition und/oder der Umschaltpunkt in Abhängigkeit des Einspritzdrucks und/oder der Umschaltpunkt in Abhängigkeit der Zeit und/oder die Nachdruckhöhe und/oder die Nachdruckzeit und/oder die Einspritzgeschwindigkeit und/oder die Zylindertemperatur und/oder die Werkzeugtemperatur sein.

Zweckmäßigerweise erfolgt die Ausgabe der Empfehlung für die bevorzugten Eingriffsbereiche und/oder der Stellgrößen auf einem Display im Falle eines gewünschten teilautomatischen Betriebs oder die Ausgabe einer oder mehrerer Empfehlungen für die Eingriffsbereiche und/oder der Stellgrößen erfolgt in eine Speichereinrichtung als Eingangsgröße für eine Spritzgießmaschinensteuerung.

Sofern für einen Bereich ($Q \leq G_1$; $G_1 < Q < G_2$; ... $G_{n-1} < Q < G_n$, $Q > G_n$) sinnvoller weise mehrere zweckmäßige/empfohlene Eingriffsbereiche und/oder Stellgrößen in Frage kommen, ist es gemäß einer bevorzugten Ausführungsform der Erfindung sinnvoll, diesen mehreren in Frage kommenden Eingriffsbereichen und/oder Stellgrößen Prioritäten nach einem Maß ihrer korrigierenden Auswirkung einer Änderung des Eingriffsbereiches und/oder der Stellgröße auf den Spritzgießzyklus zuzuordnen. Weiterhin ist es dann zweckmäßig die Empfehlungen der bevorzugten Eingriffsbereiche und/oder Stellgrößen hinsichtlich ihrer korrigierenden Auswirkung gewichtet und gegebenenfalls in ihrer Priorität gewichtet auszugeben.

Sofern ein konkreter Zahlenwert oder eine Bereichsangabe zusätzlich zur qualitativen Auswahl der Eingriffsbereiche und/oder der Stellgrößen für Korrekturwerte der Eingriffsbereiche/Stellgrößen ermittelbar sind, werden gemäß einer vorteilhaften Ausführungsform der Erfindung auch die Korrekturwerte und/oder sinnvolle Korrekturbereiche ausgegeben.

Dabei ist es vorteilhaft, dass die Korrekturwerte, insbesondere die Änderungswerte der Stellgrößen und/oder die Definitionen der Eingriffsbereiche und/oder die Werte für die Prioritäten und/oder die Werte für die korrigierenden Auswirkungen der Stellgrößen auf den Spritzgießzyklus empirisch ermittelt und in einer Datenbank abgelegt bereit gestellt werden.

Weiterhin erfolgt bevorzugt die Festlegung der Grenzwerte $G_1$... $G_n$ sowie die Zuordnung ein oder mehrerer Empfehlungen für bevorzugte Eingriffsbereiche oder Stellgrößen zu den Bereichen ($Q \leq G_1$; $G_1 < Q < G_2$; ... $G_{n-1} < Q < G_n$, $Q > G_n$) sinnvoller Weise auf der Basis der Kenntnisse eines erfahrenen Maschinenbedieners, bevorzugt während der Durchführung des mindestens eines Spritzgießzyklusses mit Spritzgießmaschineneinstellungen zum Erhalt eines qualitativ ausreichenden Spritzgießteiles. Die Erfahrungswerte des erfahrenen Maschinenbedieners werden dabei ebenfalls in einer Datenbank abgelegt und somit für einen zukünftigen Zyklusbetrieb der Spritzgießmaschine mit dem bestimmten Werkzeug vorgehalten. Diese Erfahrungswerte können mit dem Maschinendatensatz abgespeichert werden. Wenn das Werkzeug auf einer andern Spritzgießmaschine gefahren werden soll, wird dieser gesicherte Datensatz einfach wieder aufgerufen. Dies hat den Vorteil, dass es lediglich bei einer erstmaligen Einrichtung des Werkzeugs auf der Spritzgießmaschine des Wissens und der Erfahrung des erfahrenen Maschinenbedieners bedarf. Zukünftige Prozessänderungen und Anpassungen der Spritzgießparameter an sich ändernde Umgebungsbedingungen und/oder dem Wirken von Störeffekten auf dem Spritzgießprozess kann dann ohne spezielle Kenntnis eines erfahrenen Maschinenbedieners auf der Basis der Erfahrungswerte in der Datenbank erfolgen. Somit ist es erfindungsgemäß nicht mehr notwendig während der Produktion einer Vielzahl von Formteilen eines bestimmten Bauteiles ständig erfahrene und unterwiesene Maschinenbediener vorzuhalten um kurzfristige Störeffekte auf den Spritzgießprozess oder sich ändernde Umgebungsbedingungen ausgleichen zu können. Somit ist erfindungsgemäß ein wesentlicher Beitrag zur Konstanz der Formteilgüte auch unter sich ändernder Umgebungsbedingungen oder beim Auftreten von Störeffekten gewährleistet. Weiterhin gelingt es über die erfindungsgemäße Festlegung der Quotienten $Q = \Delta p/\Delta s$ oder $Q = \Delta s_n/\Delta s_e$ nach einer einmal erfolgten Werkzeugcharakterisierung bzw. Einordnung eines Werkzeugs in eine bestimmte Werkzeugkategorie, zum Beispiel dünnwandig oder dickwandig, Rohstoffqualitätsschwankungen automatisch zu erkennen und durch die Auswahl geeigneter Eingriffsbereiche oder Stellgrößen zu begegnen.

Im Folgenden wird die Erfindung anhand der beigefügten Zeichnung näher erläutert: Es zeigen in schematisierter Darstellung:

    Figur 1: ein Diagramm zur Ermittlung des Quotienten $Q = \Delta p/\Delta s$ anhand eines typischen Verlaufs des Schneckenwegs und des Massedrucks über der Zeit einer Spritzgießmaschine (Alternative 1 der Erfindung);

    Figur 2: ein Diagramm zur Ermittlung des Quotienten $Q = \Delta s_n/\Delta s_e$ anhand eines typischen Diagramms des Schneckenwegs s und des Massedrucks p über der Zeit t in einem bestimmten Spritzgießprozess und

    Figur 3: eine exemplarische Darstellung von Eingriffsbereichen und Stellgrößen über der Kennzahl Q als Parameter.

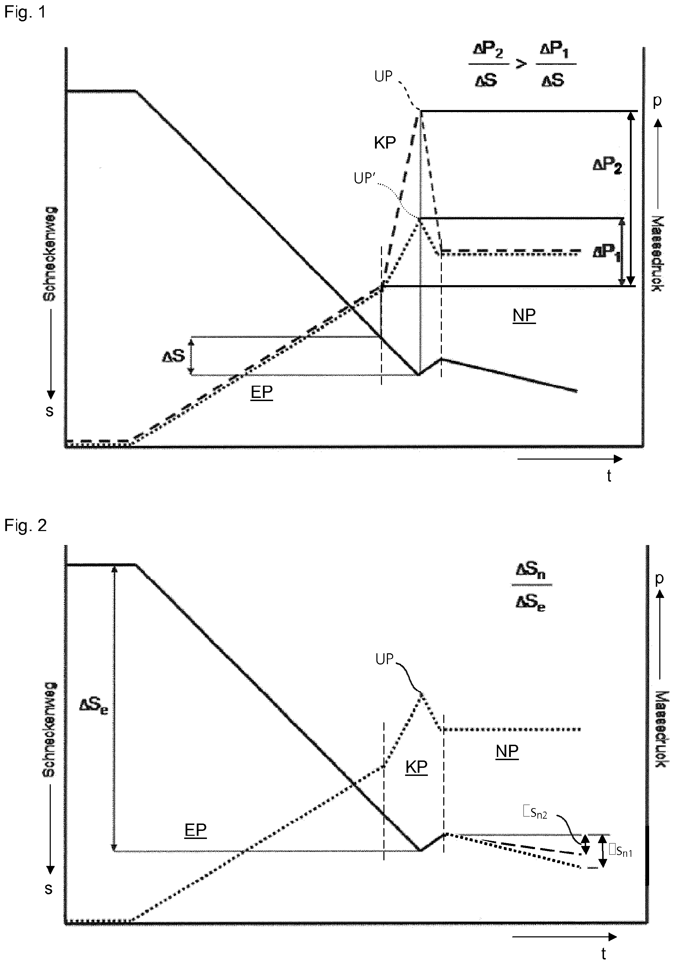

Das skizzierte Diagramm von Figur 1 zeigt über einen Spritzgießzyklus an einem Spritzgießwerkzeug hinweg einen zeitlichen Verlauf eines Schneckenwegs s und eines Massedrucks p. Nachfolgend werden die einzelnen Phasen kurz beschrieben, um dann werkzeugspezifische Eigenschaften aufzeigen zu können:
In einer Einspritzphase EP mit Start bei einer Zeit $t_o$ wird eine Spritzeinheit einer Spritzgießmaschine an eine Schließeinheit eines Werkzeugs gefahren und mit einem Auslass der Spritzeinheit in Form einer Düse an der Werkzeug angedrückt. Eine Schnecke der Spritzgießmaschine wird nun über einen bestimmten Schneckenweg s in Richtung auf die Düse hin verfahren, so dass eine vorbereitete Schmelze unter hohem Druck p durch die geöffnete Düse und einen Anguss des Spritzgießwerkzeugs in einen formgebenden Hohlraum gedrückt wird. Während dieser Einspritzphase EP wird die Schnecke mit ungefähr konstanter Geschwindigkeit verfahren, was einen ebenfalls ungefähr konstanten Anstieg des Drucks p zur Folge hat, wie in Figur 1 dargestellt.

Ein deutlicher Anstieg der Druckerhöhung kennzeichnet den Übergang von der Einspritzphase EP in eine Kompressionsphase KP. Hier ist das Werkzeug bzw. eine Kavität des Werkzeugs schon weitgehend gefüllt. Diese Phase wird mit Erreichen eines sog. Umschaltpunktes P beendet, an dem von einer Weg- auf eine Drucksteuerung umgeschaltet wird.

Die Kavität des Werkzeugs ist jetzt zwar mit dem Erreichen des Umschaltpunktes P mit plastifizierter Kunststoffmasse gefüllt, aber da das Werkzeug mit typischerweise 20 bis 120 °C kälter als die mit auf ca. 200 bis 300 °C erhitzte eingespritzte Kunststoffmasse ist, kühlt die Kunststoffmasse in der Form ab und erstarrt bei Erreichen eines Gefrierpunktes. Das Abkühlen geht dabei einher mit einer Volumenschwingung, die sich sehr nachteilig auf eine Maßhaltigkeit und eine Oberflächenqualität des herzustellenden Werkstückes auswirken kann. Um diese Schwindung so weit als möglich zu kompensieren, wird auch nach Füllung der Kavität des Werkzeugs ein reduzierter Druck aufrechterhalten, damit als Ausgleich für die Schwindung plastifizierte Kunststoffmasse in die Kavität nachfließen kann.

Zur Einregelung eines Nachdrucks auf ein gegenüber der Kompressionsphase KP niedrigeres Druckniveau wird die Schnecke gestoppt und ein Stück zurückgefahren, um dann dem geforderten Druckniveau und dem in die Kavität austretenden Kunststoff entsprechend i.d.R. wieder linear verfahren zu werden.

Schon anhand des Verlaufs des Drucks p(t) lassen sich dünnwandigere Formstücke prinzipiell von eher dickwandigen Formstücken unterscheiden. In Figur 1 zeigt eine gestrichelt eingezeichnete Kurve einen grundsätzlichen Druckverlauf bei Herstellung eines eher dünnwandigen Formstücks, eine gepunktet eingezeichnete Linie einen Druckverlauf eines eher dickwandigen Formstücks zur Darstellung charakteristischer Unterschiede. Ein Druckanstieg $\Delta p_2$ in der Kompressionsphase KP fällt bei einem eher dünnwandigen Formstück deutlich höher aus, als ein Druckanstieg $\Delta p_1$ eines eher dickwandigen Formstücks. Damit ergibt sich als charakteristisches Merkmal Q im Verhältnis zu einer jeweils während der Kompressionsphase KP verfahrenen Schneckenweg-Strecke $\Delta s$:

$$\frac{\Delta p_2}{\Delta s} > \frac{\Delta p_1}{\Delta s}$$

Aber auch in der Nachdruckphase NP unterscheiden sich eher dickwandige Formstücke von eher dünnwandigen, wie in Figur 2 skizziert. Da das eingespritzte Kunststoffmaterial in eher dünnwandigen Formstücken eher erstarrt kann in der Nachdruckphase NP bei konstantem Nachdruck nicht so viel zusätzliches Material mehr in die Kavität hineingedrückt werden. Das schlägt sich in einer deutlich geringen Schneckenweg-Strecke $\Delta s_n$ nieder. In Figur 2 ist ein eher dickwandiges Formstück durch eine gestrichelt eingezeichnete Kurve, ein eher dünnwandiges durch eine gepunktet eingezeichnete Linie in der Nachdruckphase NP exemplarisch wiedergegeben. So ergibt sich auch hier als charakteristisches Merkmal Q im Verhältnis zu einer jeweils während der Einspritzphase EP verfahrenen Schneckenweg-Strecke $\Delta s_e$:

$$\frac{\Delta s_{n1}}{\Delta s_e} > \frac{\Delta s_{n2}}{\Delta s_e}$$

Die jeweiligen charakteristischen Merkmale Q geben also Eigenschaften des Werkzeugs bzw. der Kavität wieder. Rein anhand ihrer absoluten Größe oder ihres Größenverhältnisses ist also daraufhin zurückzuschließen, ob ein Werkzeug eher dickwandige oder eher dünnwandige Formstücke erzeugen kann.

Über die Kennzahlen Q können damit auch Verfahren zur Korrektur von Rohstoffqualitätsschwankungen automatisiert betrieben werden, wobei notwendige Eingaben von erfahrenen Maschinenbedienern nicht mehr erforderlich sind. Über die Kennzahlen können regelungstechnische Anforderungen verschiedener Werkzeuge ermittelt werden und auf dieser Basis maschineninterne Regelparameter angepasst werden. So kann die Einspritzachse einer Spritzgießmaschine immer mit bester Dynamik und Reproduzierbarkeit entsprechend den spezifischen Anforderungen betrieben werden.

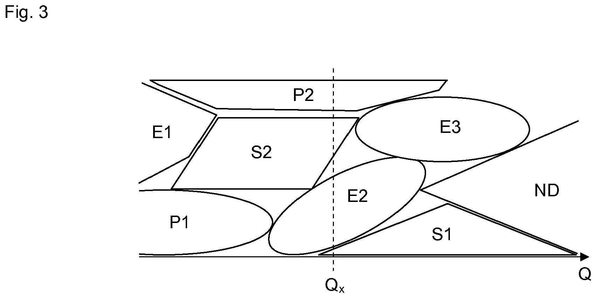

Figur 3 stellt eine Skizze von Eingriffsbereichen und Stellgrößen dar, die hier zur korrigierenden Anpassung beim Betrieb eines Werkzeuges an einer Spritzgießmaschine grundsätzlich in Frage kommen. Diese Graphik stellt eine Datenbank mit Erfahrungswerten dar, in der Anhand einer Anordnung über der Kennzahl Q als Parameter für einen festen Wert $Q_x$ erkennbar ist, dass aus einer Gesamtzahl von Möglichkeiten für ein aktuell mit diesem Wert $Q_x$ vorliegendes Werkzeug nur 4 Eingriffsbereiche und/oder Stellgrößen relevant bzw. am vielversprechensten sind, nämlich hier als Beispiel S1, E2, S2 und P2. Dabei kann eine jeweilige Größe eines Schnitts durch ein dargestelltes Feld als Indiz für dessen Einfluss auf eine mögliche Verbesserung des Produktionsergebnisses betrachtet werden. Es wird also auch ein Vorschlag geliefert, in welcher Reihenfolge Optimierungsmaßnahmen ergriffen werden sollten.

In einfacher Weise wird damit ein Hinweis auf mögliche Optimierungen und Einstellungen gegeben, ohne dass das Werkzeug selber durch einen Fachmann intensiv untersucht werden müsste.

## Bezugszeichenliste

| | |
|---|---|
| p | Massedruck |
| $\Delta p$ | Druckanstieg |
| s | Schneckenweg |
| t | Zeit |
| EP | Einspritz-Phase |
| KP | Kompressions-Phase |
| NP | Nachdruck-Phase |
| UP | Umschaltpunkt |
| $\Delta V_n$ | Volumen in der Nachdruckphase |
| $\Delta V_e$ | Volumen in der Einspritzphase |
| $\Delta s_n$ | Schneckenweg in der Nachdruckphase |
| $\Delta s_e$ | Schneckenweg in der Einspritzphase |

## Patentansprüche

1. Verfahren zur qualitativen und/oder quantitativen Einordnung von Spritzgießwerkzeugen in Werkzeugkategorien und Ermittlung von bevorzugten Eingriffsbereichen und/oder Stellgrößen zur Anpassung von Spritzgießmaschinenparametern im Falle sich ändernder Umgebungsbedingungen und/oder dem Wirken von Störeffekten auf den Spritzgießprozess, aufweisend die Schritte:

    a) Bereitstellen einer Spritzgießmaschine aufweisend das einzuordnende und für die Ermittlung vorgesehene Spritzgießwerkzeug,
    b) Durchführen mindestens eines Spritzgießzyklusses mit Spritzgießmaschineneinstellungen zum Erhalt eines qualitativ ausreichenden Spritzgießteiles,
    c) Ermitteln eines ein jeweiliges Werkzeug charakterisierenden Quotienten $Q = \Delta p/\Delta s$ oder $Q = \Delta s_n/\Delta s_e$ aus

    c.1) einem Druckanstieg $\Delta p$ während der Komprimierungsphase des Spritzgießzyklusses und des während dessen verdrängten Schmelzevolumens $\Delta V$ oder
    c.2) einem während der Nachdruckphase (NP) verdrängtem Schmelzevolumen $\Delta V_n$ und dem während der Einspritzphase (EP) verdrängten Schmelzevolumen $\Delta V_e$, wobei
    c.3) zur Ermittlung der verdrängten Volumina $\Delta V$, $\Delta V_n$ und $\Delta V_e$ ein korrespondierender Schneckenweg $\Delta s$, $\Delta s_n$ und $\Delta s_e$ gemessen wird,

    d) Bereitstellen zumindest eines Grenzwertes $(G_1 ... G_x ... G_n)$, wobei Bereichen $(Q \leq G_1; G_1 < Q < G_2; ... G_{n-1} < Q < G_n, Q > G_n)$ für die Werte

des Quotienten Q ein oder mehrere Empfehlungen für bevorzugte Eingriffsbereiche oder Stellgrößen zur Anpassung von Einstellparametern der Spritzgießmaschine zugeordnet sind,
    e) Ermitteln, in welchem der Bereiche $Q \leq G_1$; $G_1 < Q < G_2$; ... $G_{n-1} < Q < G_n$, $Q > G_n$ der Wert des Quotienten Q liegt und
    f) Ausgabe der dem ermittelten Bereich zugeordneten bevorzugten Eingriffsbereiche und/oder Stellgrößen zur Anpassung der Maschinenparameter der Spritzgießmaschine.

2. Verfahren nach Anspruch 1, **dadurch gekennzeichnet, dass** zur Ermittlung des Druckanstieges $\Delta p$ der Verlauf des Massedrucks oder des Werkzeuginnendrucks gemessen wird.

3. Verfahren nach Anspruch 1 oder 2, **dadurch gekennzeichnet, dass** ein Korrekturfaktor $(K_{dyn})$ bereitgestellt oder ermittelt wird, mittels dem der Wert Q um dynamisch bedingte Änderungen des Wertes für den ein jeweiliges Werkzeug charakterisierenden Quotienten (Q) bereinigt wird, zum Beispiel um einen Einfluss der Einspritzgeschwindigkeit.

4. Verfahren nach einem der vorangegangenen Ansprüche, **dadurch gekennzeichnet, dass** empfohlene Eingriffsbereiche die Einspritzphase (EP), die Komprimierungsphase (KP) oder die Nachdrucksphase (NP) des Spritzgießzyklusses sind.

5. Verfahren nach einem der vorangegangenen Ansprüche, **dadurch gekennzeichnet, dass** die Stellgrößen der Umschaltpunkt in Abhängigkeit der Schneckenposition und/oder der Umschaltpunkt in Abhängigkeit des Einspritzdruck und/oder der Umschaltpunkt in Abhängigkeit der Zeit und/oder die Nachdruckhöhe und/oder die Nachdruckzeit, die Einspritzgeschwindigkeit und/oder die Zylindertemperatur und/oder die Werkzeugtemperatur sind.

6. Verfahren nach einem der vorangegangenen Ansprüche, **dadurch gekennzeichnet, dass** die Ausgabe der Empfehlung für die bevorzugten Eingriffsbereiche und/oder der Stellgrößen auf einem Display erfolgt oder eine oder mehrere Empfehlungen für die Eingriffsbereiche und/oder die Stellgrößen in einer Speichereinrichtung als Eingangsgröße für eine Spritzgießmaschinensteuerung zur Verfügung gestellt werden.

7. Verfahren nach einem der vorangegangenen Ansprüche, **dadurch gekennzeichnet, dass** den Eingriffsbereichen und/oder Stellgrößen in Abhängigkeit der Bereiche $(Q \leq G_1; G_1 < Q \leq G_2; ... G_{n-1} < Q \leq G_n, Q > G_n)$ Prioritäten für ein Maß ihrer korrigierenden Auswirkung einer Änderung des Eingriffsbereichs und/oder der Stellgröße auf den Spritzgießzyklus zugeordnet sind und die Empfehlungen der bevorzugten Eingriffsbereiche und/oder Stellgrößen hinsichtlich ihrer korrigierenden Auswirkung gewichtet und gegebenenfalls in ihrer Priorität gewichtet ausgegeben werden.

8. Verfahren nach einem der vorangegangenen Ansprüche, **dadurch gekennzeichnet, dass** zusätzlich zu der qualitativen Auswahl der Eingriffsbereiche und/oder der Stellgrößen Korrekturwerte für die Eingriffsbereiche/Stellgrößen ausgegeben werden.

9. Verfahren nach einem der vorangegangenen Ansprüche, **dadurch gekennzeichnet, dass** die Korrekturwerte, insbesondere Änderungswerte für die Stellgrößen und/oder Definitionen der Eingriffsbereiche und/oder Werte für die Prioritäten und/oder Werte für die korrigierenden Auswirkungen der Stellgrößen auf den Spritzgießzyklus, empirisch ermittelt und in einer Datenbank abgelegt bereitgestellt werden.

10. Verfahren nach einem der vorangegangenen Ansprüche, **dadurch gekennzeichnet, dass** aus den empirisch ermittelten bevorzugten Eingriffsbereichen und/oder Stellgrößen und/oder deren Prioritäten und/oder deren Korrekturwerte ein Kennfeld erstellt wird und in Abhängigkeit des Wertes Q ein geeigneter Punkt des Kennfeldes ermittelt wird, wobei die dem ermittelten Punkt des Kennfeldes zugeordneten Korrekturwerte und/oder Empfehlungen ausgegeben und/oder in einem Speicher abgelegt werden.

**Claims**

1. A method for qualitatively and/or quantitatively classifying injection-moulding tools in tool categories and determining preferred intervention ranges and/or manipulated variables for adapting injection-moulding machine parameters in the case of changing ambient conditions and/or determining the influence of disturbing effects on the injection-moulding process, comprising the steps:

   a) providing an injection-moulding machine having the injection-moulding tool which is to be classified and which is intended for the determination,
   b) performing at least one injection-moulding cycle with injection-moulding machine settings in order to obtain a qualitatively adequate injection-moulding part,
   c) determining a quotient $Q = \Delta p / \Delta s$ or $Q = \Delta s_n / \Delta s_e$ characterizing a respective tool from

      c.1) a pressure rise $\Delta p$ during the compres-

sion phase of the injection-moulding cycle and the melt volume $\square V$ displaced during the compression phase or
c.2) a melt volume $\Delta V_n$ displaced during the holding-pressure phase and the melt volume $\Delta V_e$ displaced during the injection phase, wherein
c.3) a corresponding screw travel $\Delta s$, $\Delta s_n$ and $\Delta s_e$ is measured in order to determine the displaced volumes $\Delta V$, $\Delta V_n$ and $\Delta V_e$,

d) providing at least one limit value ($G_1 ... G_x ... G_n$), wherein one or more recommendations for preferred intervention ranges or manipulated variables for adapting adjustment parameters of the injection-moulding machine are associated with ranges ($Q \leq G_1$; $G_1 < Q < G_2$; ... $G_{n-1} < Q < G_n$, $Q > G_n$) for the values of the quotient Q,
e) determining in which of the ranges $Q \leq G_1$; $G_1 < Q < G_2$; ... $G_{n-1} < Q < G_n$, $Q > G_n$ the value of the quotient Q lies, and
f) outputting the preferred intervention ranges and/or manipulated variables for adapting the machine parameters of the injection-moulding machine which are associated with the determined range.

2. The method according to Claim 1, **characterized in that** for determining the pressure rise $\Delta p$, the course of the melt pressure or of the tool internal pressure is measured.

3. The method according to Claim 1 or 2, **characterized in that** a correction factor ($K_{dyn}$) is provided or determined, by means of which the value Q is corrected by dynamically caused changes of the value for the quotient (Q) characterizing a respective tool, for example by an influence of the injection speed.

4. The method according to one of the preceding claims, **characterized in that** recommended intervention ranges are the injection phase (EP), the compression phase (KP) or the holding-pressure phase (NP) of the injection-moulding cycle.

5. The method according to one of the preceding claims, **characterized in that** the manipulated variables are the switchover point as a function of the screw position and/or the switchover point as a function of the injection pressure and/or the switchover point as a function of time and/or the holding pressure level and/or the holding pressure time, the injection speed and/or the cylinder temperature and/or the tool temperature.

6. The method according to one of the preceding claims, **characterized in that** the outputting of the recommendation for the preferred intervention ranges and/or of the manipulated variables takes place on a display, or one or more recommendations for the intervention ranges and/or the manipulated variables are made available in a storage facility as input value for an injection-moulding machine control.

7. The method according to one of the preceding claims, **characterized in that** there are associated with the intervention ranges and/or manipulated variables, as a function of the ranges ($Q \leq G_1$; $G_1 < Q \leq G_2$; ... $G_{n-1} < Q \leq G_n$, $Q > G_n$), priorities for a measure of their correcting effect of a change of the intervention range and/or of the manipulated value on the injection-moulding cycle, and the recommendations of the preferred intervention ranges and/or manipulated values are outputted weighted with regard to their correcting effect and, if applicable, weighted in their priority.

8. The method according to one of the preceding claims, **characterized in that** in addition to the qualitative selection of the intervention ranges and/or of the manipulated values, correction values are outputted for the intervention ranges/manipulated values.

9. The method according to one of the preceding claims, **characterized in that** the correction values, in particular change values for the manipulated values and/or definitions of the intervention ranges and/or values for the priorities and/or values for the correcting effects of the manipulated values on the injection-moulding cycle are determined empirically and are provided deposited in a data bank.

10. The method according to one of the preceding claims, **characterized in that** a characteristic diagram is established from the empirically determined preferred intervention ranges and/or manipulated values and/or the priorities thereof and/or the correction values thereof, and a suitable point of the characteristic diagram is determined as a function of the value Q, wherein the correction values and/or recommendations associated with the determined point of the characteristic diagram are outputted and/or are deposited in a memory.

**Revendications**

1. Procédé permettant de classer de manière qualitative et/ou quantitative des outils de moulage par injection dans des catégories d'outils et de déterminer des plages d'intervention et/ou des grandeurs de réglage préférées pour adapter des paramètres de machine de moulage par injection dans le cas de conditions environnantes qui changent et/ou de l'effet de perturbations sur le procédé de moulage par injection, présentant les étapes :

    a) de fourniture d'une machine de moulage par injection présentant l'outil de moulage par injection à classer et prévu pour la détermination,
    b) d'exécution d'au moins un cycle de moulage par injection avec des réglages de machine de moulage par injection pour obtenir une pièce moulée par injection satisfaisante sur le plan qualitatif,
    c) de détermination d'un quotient $Q = \Delta p/\Delta s$ ou $Q = \Delta s_n/\Delta s_e$ caractérisant un outil respectif à partir de

        c.1) une montée en pression $\Delta p$ pendant la phase de compression du cycle de moulage par injection et du volume de fonte AV refoulé pendant ce temps ou
        c. 2) un volume de fonte $\Delta V_n$ refoulé pendant la phase de maintien en pression (NP) et du volume de fonte $\Delta V_e$ refoulé pendant la phase d'injection (EP), dans lequel
        c.3) pour déterminer les volumes $\Delta V$, $\Delta v_n$ et $\Delta V_e$ refoulés, un trajet de vis sans fin $\Delta s$, $\Delta s_n$ et $As_e$ correspondant est mesuré,

    d) de fourniture d'au moins une valeur limite ($G_1... G_x ... G_n$), dans lequel une ou plusieurs recommandation(s) de plages d'intervention ou de grandeurs de réglage préférées pour adapter des paramètres de la machine de moulage par injection est/sont attribuée(s) à des plages ($Q \leq G_1$ ; $G_1 < Q < G_2$ ; ... $G_{n-1} < Q < G_n$, $Q > G_n$) pour les valeurs du quotient Q,
    e) de détermination dans laquelle des plages $Q \leq G_1$ ; $G_1 < Q < G_2$ ; ... $G_{n-1} < Q < G_n$, $Q > G_n$ est située la valeur du quotient Q et
    f) d'affichage des plages d'intervention et/ou grandeurs de réglage préférées attribuées à la plage déterminée pour adapter les paramètres de la machine de moulage par injection.

2. Procédé selon la revendication 1, **caractérisé en ce que** pour déterminer la montée en pression $\Delta p$, le profil de la pression massique ou de la pression interne de l'outil est mesuré.

3. Procédé selon la revendication 1 ou 2, **caractérisé en ce qu'**un facteur de correction ($K_{dyn}$) est fourni ou déterminé, au moyen duquel la valeur Q est corrigée de modifications de la valeur dues à la dynamique pour le quotient (Q) caractérisant un outil respectif, par exemple, d'une influence de la vitesse d'injection.

4. Procédé selon l'une des revendications précédentes, **caractérisé en ce que** des plages d'intervention recommandées sont la phase d'injection (EP), la phase de compression (KP) ou la phase de maintien en pression (NP) du cycle de moulage par injection.

5. Procédé selon l'une des revendications précédentes, **caractérisé en ce que** les grandeurs de réglage sont le point de commutation en fonction de la position de la vis sans fin et/ou le point de commutation en fonction de la pression d'injection et/ou le point de commutation en fonction du temps et/ou la hauteur de maintien en pression et/ou le temps de maintien en pression, la vitesse d'injection et/ou la température du cylindre et/ou la température de l'outil.

6. Procédé selon l'une des revendications précédentes, **caractérisé en ce que** l'affichage de la recommandation des plages d'intervention et/ou grandeurs de réglage préférées s'effectue sur un écran ou bien une ou plusieurs recommandation (s) de plages d'intervention et/ou de grandeurs de réglage est/sont mise(s) à disposition dans une mémoire en tant que grandeur d'entrée pour une commande de machine de moulage par injection.

7. Procédé selon l'une des revendications précédentes, **caractérisé en ce que** des priorités sont attribuées aux plages d'intervention et/ou grandeurs de réglage en fonction des plages ($Q \leq G_1$ ; $G_1 < Q < G_2$ ; ... $G_{n-1} < Q < G_n$, $Q > G_n$) pour une mesure de leur effet correcteur d'une modification de la plage d'intervention et/ou de la grandeur de réglage sur le cycle de moulage par injection et les recommandations des plages d'intervention et/ou grandeurs de réglage préférées sont affichées pondérées en ce qui concerne leur effet correcteur et le cas échéant pondérées dans leur priorité.

8. Procédé selon l'une des revendications précédentes, **caractérisé en ce qu'**outre la sélection qualitative des plages d'intervention et/ou grandeurs de réglage, des valeurs de correction sont affichées pour les plages d'intervention/grandeurs de réglage.

9. Procédé selon l'une des revendications précédentes, **caractérisé en ce que** les valeurs de correction, en particulier des valeurs de modification pour les grandeurs de réglage et/ou des définitions des plages d'intervention et/ou des valeurs pour les priorités et/ou des valeurs pour les effets correcteurs des grandeurs de réglage sur le cycle de moulage par injection, sont déterminées de façon empirique et fournies stockées dans une base de données.

10. Procédé selon l'une des revendications précédentes, **caractérisé en ce qu'**un diagramme caractéristique est établi à partir des plages d'intervention et/ou grandeurs de réglage préférées déterminées de façon empirique et/ou de leurs priorités et/ou de leurs valeurs de correction, et en fonction de la valeur Q, un point approprié du diagramme caractéristique est déterminé, dans lequel les valeurs de correction et/ou recommandations attribuées au point déterminé du diagramme caractéristique sont affichées et/ou mises en mémoire.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5738809 A
- EP 1166994 A